# EUROPEAN PATENT SPECIFICATION

(11) **EP 0 890 892 B1**
(45) Date of publication and mention of the grant of the patent: **07.11.2001**
(21) Application number: 98830293.1
(22) Date of filing: 15.05.1998
(51) Int. Cl.: F01P 7/16, G05D 23/02

(54) **Thermostatic valve for regulating the cooling liquid flow of internal combustion engines**
Thermostatventil zur Regelung des Kühlmitteldurchflusses von Brennkraftmaschinen
Vanne thermostatique pour réguler le débit de liquide de refroidissement dans les moteurs à combustion interne

(30) Priority: 09.06.1997 IT TO970498
(43) Date of publication of application: 13.01.1999
(73) Proprietor: Behr Thermot-tronik Italia S.p.A., 10123 Torino (IT)
(72) Inventor: Triberti, Franco, 10095 Grugliasco (Torino) (IT)
(74) Representative: Buzzi, Franco

(56) References cited:
- DE-U- 8 705 290
- FR-A- 1 488 140

## Description

The present invention is related to thermostatic valves for regulating the flow of the cooling liquid of internal combustion engines, namely for motorvehicle.

In this kind of application, the liquid flow path through the valve is for instance connected at one side to the engine, and at the other side to the radiator for liquid refrigerating. To adjust the flow of the cooling liquid of the engine it is necessary, to the aim of obtaining a proper stabilisation of the circuit (intended as constancy of the liquid temperature as a function of the time), that the increase of the flow rate of the cooling liquid at the beginning of the valve opening be as smooth as possible.

More particularly, the invention is directed to a thermostatic valve of the type set forth in the precharacterising portion of Claim 1, and generally disclosed in FR-A-1.488.140. According to this known solution, upon expansion of the heat expansible material of the thermostatic unit the second disk obturator opens before the first disk obturator. This is because the first disk obturator and the body of the thermostatic unit are axially diplaceable relative to each other: the first disk obturator is thus not axially fixed to the thermostatic unit, namely is floating therealong, and is held in its closed position against the first valve seat merely by the action of the fluid pressure acting on the thermostatic valve. This on one hand involves critical functional limitations due to transiency of the first (main) valve upon fluid pressure fluctuations (particularly upon opening of the second valve), and in case of vibrations. On the other hand, the delay in opening the first (main) valve may also jeopardize operative reliability and safety of the coolant circuit system as a whole.

The object of the present invention is to provide a thermostatic valve of the above-referenced type enabling to fulfil the requirement set forth at the beginning in an efficient, simple and economical way, ensuring an almost micrometrical adjustment of the flow rate of the cooling liquid during the initial phase of the valve opening.

According to the invention this object is achieved essentially by virtue of the fact that the thermostatic valve according to the invention is characterised in that:
- said second annular valve seat is defined by a substantially conical axial surface of said body diverging towards said first valve seat,
- said second obturator has a peripheral edge radially facing towards said second valve seat, and
- said second valve seat and said second disk obturator being provided in series with said first valve seat and said first disk obturator and the arrangement being such that, in operation, upon expansion of said heat-expansible material a progressive opening of said second disk obturator relative to said second valve seat takes place after opening of said first disk obturator relative to said first valve seat.

Due to this feature, the thermostatic valve according to the invention is capable to provide a smooth increase of the rate of flow of the engine cooling liquid during the initial phase of the valve opening, i.e. upon separation between the main valve obturator and the related valve seat. This smooth increase is determined by the fact that the passage of the liquid is provided through the annular gap defined between the peripheral edge of the secondary valve obturator and the diverging wall of the related annular valve seat, whose radial width progressively increases during the opening phase of the valve. Accordingly an efficient stabilisation of the cooling circuit, according to the terms clarified in the above, is ensured.

In a preferred embodiment of the invention, the housing of the thermostatic valve unit has an axial end appendage on which the second obturator is engaged and whose terminal edge is riveted against said second obturator for axial locking thereof relative to the housing. Accordingly, assembling of the second obturator onto the valve unit can be performed in an extremely simple and economical fashion.

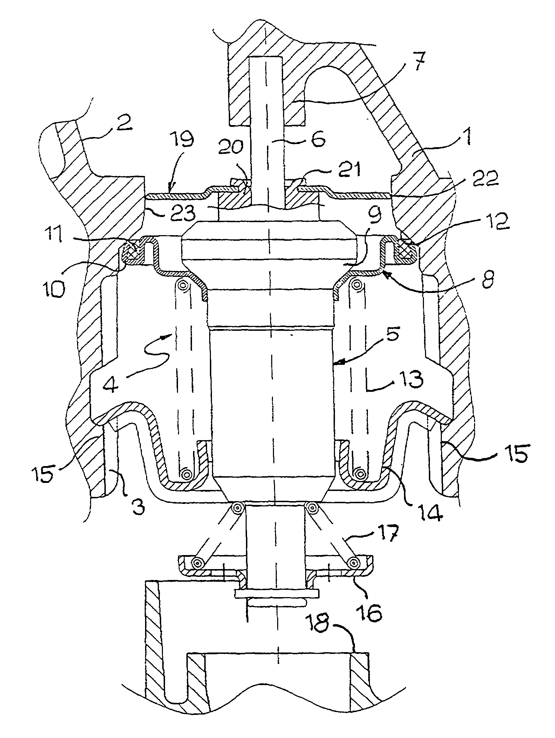

The invention will now be disclosed in detail with reference to the accompanying drawing, purely provided by way of non limiting example, which is a diagrammatic and partially axially sectioned view of a thermostatic valve according to the invention, shown in the closed condition.

In the drawing, reference numeral 1 indicates a part of a hollow body, normally made of die-cast aluminium or even high resistance moulded plastic material, arranged within the circuit of the cooling liquid of a motorvehicle internal combustion engine. The body 1 defines at one side a duct 2 normally connected to a refrigerating radiator, and at the opposite side a duct 3 connected to the engine. The flow of the cooling liquid from the duct 3 to the duct 2 is controlled by a thermostatic valve unit 4 comprising, in a generally conventional fashion, a cylindrical housing 5 containing a heat-expansible material having a high thermal expansion coefficient, for instance a wax material capable to rapidly expand within a predetermined temperature range. The housing 5 is coupled coaxially and in a telescopically slidable way onto a stem 6 whose free end reacts against a front bearing 7 formed within the body 1.

Reference numeral 8 designates a main valve obturator formed by an annular disk coaxially mounted on the housing 4, beneath an annular enlarged portion 9 thereof, and whose peripheral edge 10 is shaped so as to define a perimetral seat housing a ring gasket 11. The ring gasket 11 cooperates with a first annular valve seat 12 formed, coaxially to the housing 5, within the body 1.

Reference numeral 13 designates a compression helical spring arranged around the housing 5 and reacting on one side against the main obturator 8, and on the opposite side against a transverse support member 14 across which the housing 5 is slidably guided axially. The ends of the transverse support member 14 are fitted onto a pair of inner legs 15 of the body 1.

At the side opposite to the disk obturator 8, the thermostatic valve unit 5 may be provided with a further disk obturator 16 and associated thrust spring 17, designed to cooperate with a valve seat 18 of the body 1 to control the flow of the cooling liquid for instance along a return passage.

According to the invention, the thermostatic valve unit 4 includes a second valve obturator consisting of an annular disk 19 arranged in series to the valve obturator 8 and carried, coaxially therewith, by the cylindrical housing 5. In the case of the shown example, the housing 5 is formed, on the side of the reaction stem 6, with an axial end appendage 20, having at least in part an annular design, on which the second obturator 19 is engaged. The terminal edge 21 of the appendage 20 is riveted against the second obturator 19, so as to fixedly secure it to the cylindrical housing 5.

The peripheral annular edge of the second obturator 19, indicated as 22, is radially facing towards a second annular valve seat 23 of the body 1, which is coaxial to and arranged in series with the annular valve seat 12 with respect to the flow of the cooling liquid. The second annular valve seat 23 is formed by an axial surface diverging towards the first annular valve seat 12, having for instance a conical shape.

In the closed condition of the thermostatic valve shown in the drawing, in which the gasket 11 of the first valve obturator 8 is kept under sealed contact against the first valve seat 12, the second valve obturator 19 is located in axial correspondence of the narrower area of the second valve seat 23. Between the peripheral edge 22 of the second valve obturator 19 and the second valve seat 23 a slight radial gap is defined in this condition, to the aim of preventing any interference or dragging between the obturator 19 and the body 1 in the initial opening phase and in the final closing phase of the valve.

In the closed condition of the valve the flow of the cooling liquid from the duct 3 to the duct 2, i.e. from the engine to the radiator, is thus prevented owing to closure of the first obturator 8 against the first valve seat 12, under the action of the spring 13. When the temperature of the cooling liquid increases up to a predetermined value, the heat-expansible material contained within the housing 5 rapidly expands, applying an axial thrust to the reaction stem 6. As a consequence an axial displacement of the housing 5 along the stem 6 takes place, across the transverse support member 14 and against the action of the spring 13. During the initial displacement phase of the housing 5, the first obturator 8 moves away from the first valve seat 12, thus opening the flow path of the liquid from the duct 3 towards the duct 2. The liquid flow is thus produced initially through the narrow annular gap defined between the peripheral edge 22 of the second obturator 19 and the second valve seat 23. Following further axial displacement of the housing 5, and the corresponding displacement of the second valve obturator 19, the annular path between the peripheral edge 22 thereof and the second valve seat 23 progressively widens, whereby the passage for the cooling liquid gets smoothly larger, up to a condition of maximum opening in which the second valve obturator 19 is located completely beneath the second valve seat 23.

When the temperature of the cooling liquid decreases, contraction of the heat-expansible material of the valve unit 4 enables the spring 13 to bring the housing 5, and thus the obturators 8 and 19, back to the initial closed condition of the valve.

It is to be pointed out that the effect of progressive opening of the flow path operated by the second obturator 19 can be easily adjusted and adapted to the specific application requirement intervening on the shape of the surface of the second annular valve seat 23. For instance, instead of being substantially conical as in the case of the shown example, the surface of the second valve seat 23 may have a different arrangement, with a more or less important width variation in the axial direction, and possibly even with an initial portion of constant width, i.e. having a cylindrical surface. Evidently the profile variations of the second valve seat 23 provide corresponding variations of the curve of the liquid flow rate during the opening and closing phases of the valve.

Naturally the details of construction and the embodiments may be widely varied with respect to what has been disclosed and illustrated the scope of protection being determined by the appended claims.

## Claims

1. Thermostatic valve for regulating the flow of the cooling liquid of an internal combustion engine, comprising a body (1) defining a flow path (3-2) for the colling liquid and a first annular valve seat (12) in the direction of the flow, a thermostatic valve unit (4) arranged within said flow path and including a cylindrical housing (5) containing a heat-expansible material having a high thermal expansion coefficient and a reaction stem (6) projecting from one end of the housing (5) and relative to which said housing (5) is axially displaceable, starting from a rest retracted condition, upon expansion of said heat-expansible material following a temperature increase in said flow path, a first annular disk valve obturator (8) coaxially carried by the housing (5) and cooperating with said first annular valve seat (12), and resilient means (13) urging said housing (5) towards said rest retracted position corresponding to closure of said first disk obturator (8) against said first valve seat (12), wherein said cylindrical housing (5) of the valve unit (4) carries a second annular disk valve obturator (19) coaxial to said first disk obturator (8) and cooperating with a second annular valve seat (23) coaxial with said first valve seat (12),
**characterised in that**:
- said second annular valve seat (23) is defined by a substantially conical axial surface of said body (1) diverging towards said first valve seat (12),
- said second obturator (19) has a peripheral edge (22) radially facing towards said second valve seat (23), and
- said second valve seat (23) and said second disk obturator (19) being provided in series with said first valve seat (12) and said first disk obturator (8) and the arrangement being such that, in operation, upon expansion of said heat-expansible material a progressive opening of said second disk obturator (19) relative to said second valve seat (23) takes place after opening of said first disk obturator (8) relative to said first valve seat (12).

2. Thermostatic valve according to claim 1,
**characterised in that** said housing (5) of the thermostatic valve unit (4) has an axial end appendage (20) on which said second obturator is engaged (19) and whose terminal edge (21) is riveted against said second obturator (19) for axial locking thereof relative to said housing (5).

3. Thermostatic valve according to claim 1 or claim 2, **characterized in that** said second valve seat (23) defined by a substantially conical axial surface further comprises an initial portion having a cylindrical surface.

## Patentansprüche

1. Termostat-Ventil zum Regulieren des Flusses der Kühlflüssigkeit eines Verbrennungsmotors, umfassend einen Körper (1), der einen Durchflussweg (3-2) für die Kühlflüssigkeit und einen ersten ringförmigen Ventilsitz (12) in der Flußrichtung festlegt, eine Thermostat-Ventileinheit (4), die innerhalb des Durchflussweges angeordnet ist und ein zylindrisches Gehäuse (5) aufweist, das ein Wärme-ausdehnbares Material mit einem großen Wärmeausdehnungskoeffizienten enthält und einen gegenwirkenden Stab (6), der von einem Ende des Gehäuses (5) hervorragt, wobei das Gehäuse (5) beginnend von einem eingefahrenen Ruhezustand bei Ausdehnung des Wärme-ausdehnbaren Materials nach einer Temperaturerhöhung in dem Durchflussweg relativ dazu axial verschiebbar ist, ein erstes ringförmiges Scheibenventil-Absperrmittel (8), das von dem Gehäuse (5) koaxial getragen wird und mit dem ersten ringförmigen Ventilsitz (12) zusammenwirkt, und elastische Mittel (13), die das Gehäuse (5) in Richtung des eingefahrenen Ruhezustandes treiben, der einem Schließen des ersten Scheiben-Absperrmittels (8) gegen den ersten Ventilsitz (12) entspricht, wobei das zylindrische Gehäuse (5) der Ventileinheit (4) ein zweites ringförmiges Scheibenventil-Absperrmittel (19) trägt, das zu dem ersten Scheiben-Absperrmittel (8) koaxial angeordnet ist, und mit einem zweiten ringförmigen Ventilsitz (23), der zu dem ersten Ventilsitz (12) koaxial angeordnet ist, zusammenwirkt,
**dadurch gekennzeichnet, dass**:
- der zweite ringförmige Ventilsitz (23) durch eine im wesentlichen kegelförmige axiale Oberfläche des Körpers (1) festgelegt ist, die in Richtung auf den ersten Ventilsitz (12) auseinanderläuft,
- das zweite Absperrmittel (19) eine periphere Kante (22) aufweist, die radial in Richtung auf den zweiten Ventilsitz (23) weist, und
- der zweite Ventilsitz (23) und das zweite Scheiben-Absperrmittel (19) in Reihe mit dem ersten Ventilsitz (12) und dem ersten Scheiben-Absperrmittel (8) bereitgestellt sind und die Anordnung derart gebildet ist, dass im Betrieb, bei Ausdehnung des Wärme-ausdehnbaren Materials, ein fortschreitendes Öffnen des zweiten Scheiben-Absperrventils (19) relativ zu dem zweiten Ventilsitz (23) nach Öffnen des ersten Scheiben-Absperrmittels (8) relativ zu dem ersten Ventilsitz (12) stattfindet.

2. Thermostat-Ventil gemäß Anspruch 1, **dadurch gekennzeichnet, dass** das Gehäuse (5) der Thermostat-Ventileinheit (4) einen axialen End-Anhang (20) aufweist, mit dem das zweite Absperrmittel in Eingriff steht (19) und dessen Endkante (21) gegen das zweite Absperrmittel (19) zu dessen axialer Befestigung bezüglich des Gehäuses (5) genietet ist.

3. Thermostat-Ventil gemäß Anspruch 1 oder Anspruch 2, **dadurch gekennzeichnet, dass** der zweite Ventilsitz (23), der durch eine im wesentlichen kegelförmige axiale Oberfläche festgelegt ist, und weiter einen Anfangsteil mit einer zylindrischen Oberfläche aufweist.

## Revendications

1. Vanne thermostatique pour réguler le débit du liquide de refroidissement d'un moteur à combustion interne, comprenant un corps (1) définissant un passage (3, 2) pour l'écoulement du liquide de refroidissement et un premier siège annulaire de vanne (12) dans le sens du flux, une unité à vanne thermostatique (4) disposée à l'intérieur dudit passage d'écoulement et comportant un carter cylindrique (5) contenant un matériau expansible à la chaleur ayant un coefficient élevé de dilatation thermique, ainsi qu'une tige de réaction (6) se projetant depuis une extrémité du carter (5) et par rapport à laquelle ledit carter (5) peut se déplacer axialement en partant d'une position rétractée de repos sous l'effet de la dilatation dudit matériau expansible à 1a Chaleur résultant d'un accroissement de température dans ledit passage d'écoulement, un premier obturateur de vanne à disque annulaire (8) porté coaxialement par le carter (5) et coopérant avec ledit premier siège annulaire de vanne (12), et des moyens élastiques (13) pressant ledit carter (5) en direction de ladite position rétractée de repos correspondant à la fermeture dudit premier obturateur à disque (8) contre ledit premier siège de vanne (12), ledit carter cylindrique (5) de l'unité à vanne (4) portant un second obturateur de vanne à disque annulaire (19) coaxial audit premier obturateur à disque (8) et coopérant avec un second siège annulaire de vanne (23) coaxial avec ledit premier siège de vanne (12), **caractérisé en ce que** :
- ledit second siège annulaire de vanne (23) est défini par une surface axiale sensiblement conique dudit corps (1), laquelle diverge en direction du premier siège de vanne (12),
- ledit second obturateur (19) présente une bordure périphérique (22) orientée radialement en direction dudit second siège de vanne (23), et
- ledit second siège de vanne (23) et ledit second obturateur à disque (19) sont disposés en série avec ledit premier siège de vanne (12) et ledit premier obturateur à disque (8), et l'agencement étant tel que, en fonctionnement, sous l'effet de la dilatation dudit matériau expansible à la chaleur, une ouverture progressive dudit second obturateur à disque (19) par rapport audit second siège de vanne (23) a lieu après l'ouverture dudit premier obturateur à disque (8) par rapport audit premier siège de vanne (12).

2. Vanne thermostatique selon la revendication 1, **caractérisée en ce que** ledit carter (5) de l'unité à vanne thermostatique (4) possède un appendice (20) à son extrémité axiale, sur lequel ledit second obturateur (19) est engagé et dont la bordure terminale (21) est rivetée contre ledit second obturateur (19), en vue d'un blocage axial de celui-ci par rapport audit carter (5).

3. Vanne thermostatique selon la revendication 1 ou la revendication 2, **caractérisée en ce que** ledit second siège de vanne (23) défini par une surface axiale sensiblement conique comporte de plus une section initiale ayant une surface cylindrique.
